# EUROPEAN PATENT SPECIFICATION

(11) **EP 3 170 718 B1**
(45) Date of publication and mention of the grant of the patent: **15.01.2020**
(21) Application number: 15195262.9
(22) Date of filing: 18.11.2015
(51) Int. Cl.: B62B 7/04, B62B 7/08, B62B 7/14

(54) **BABY STROLLER WITH A SUSPENSION UNIT**
KINDERWAGEN MIT EINER AUFHÄNGUNGSEINHEIT
POUSSETTE DE BÉBÉ AVEC UNE UNITÉ DE SUSPENSION

(43) Date of publication of application: 24.05.2017
(73) Proprietor: BOR LI Co., Ltd., Tainan City 722 (TW)
(72) Inventor: CHEN, Mei-Feng, 722 Tainan City (TW)
(74) Representative: Jannig & Repkow Patentanwälte PartG mbB

(56) References cited:
- EP-A2- 1 764 281
- DE-A1-102007 047 578
- DE-C- 50 961
- US-A1- 2006 237 932
- US-A1- 2010 308 550

## Description

### BACKGROUND OF THE INVENTION

### 1. Fields of the invention

The present invention relates to a baby stroller, and more particularly, to a baby stroller with a suspension unit for absorbing shocks transferred from the ground. The sit or bed can be pivoted to face the user or to face front.

### 2. Descriptions of Related Art

The conventional baby stroller includes a frame with a seat or a bed on the top of the frame, and three or four wheels connected to the frame so that a baby can comfortably sit in the seat and the user can easily move the baby stroller. The conventional baby stroller is foldable for convenient carry and storage. However, the seat or bed is fixed at a certain height so that the user may not convenient to put the baby in the seat or to move the baby from the seat. The fixed height may not be suitable for the users of different heights. Furthermore, the conventional baby stroller does not have a proper suspension unit so that the shocks or vibration will be directly transferred to the baby who may be scared or even injured.

The seat or bed usually face front and cannot be rotated, in some situations, the parent may want the baby to see him/her. Although the seat or bed of some baby strollers can be re-adjusted its orientation, the processes are complicated and become a burden for most of the users. Such a baby stroller is disclosed by document DE102007047578.

The present invention intends to provide a baby stroller to eliminate the shortcomings mentioned above.

### SUMMARY OF THE INVENTION

The present invention relates to a baby stroller and comprises a base and a suspension unit which is connected to the base. The suspension unit has a movable rod which is movably connected to the suspension unit. A support frame is connected to the distal end of the movable rod. The distance between the support frame and the base is adjusted by the movement of the movable rod.

The movable rod is rotatable relative to the suspension unit. A positioning seat is mounted to the suspension unit and has at least one restriction portion. The support frame has at least one control rod which is located corresponding to the at least one restriction portion. The at least one control rod is connected to the at least one restriction portion when the at least one control rod is located at a locked position. The at least one control rod is disconnected from the at least one restriction portion when the at least one control rod is located at an unlocked position. The support frame is pivotable when the movable rod is pivoted.

The support frame has a tube which has at least one passage. At least one slide is located in the at least one passage and connected to the at least one control rod. The at least one slide has a stepped face. At least one movable block is inserted into the at least one passage and located substantially perpendicular to the at least one control rod. The at least one movable block has a rail which is an inclined surface and located corresponding to the stepped face of the at least one slide. The at least one slide is moved up and down when stepped face of the at least one slide is moved along the rail.

Preferably, the suspension unit is a pneumatic cylinder or a hydraulic cylinder.

Preferably, the movable rod is a piston rod of the pneumatic cylinder or the hydraulic cylinder. The movable rod has a valve which is connected to and controlled by an operation member.

Preferably, the support frame has a tube which has a hole. The valve is located on one side of the hole. The operation member is connected to the hole.

Preferably, the base has a support member and the suspension unit is connected to the support member.

Preferably, the support member has at least one first link and at least one sleeve. The at least one first link is pivotably connected to the frame. The at least one sleeve is slidably connected to the frame. When the at least one sleeve is moved toward an end of the at least one first link, the suspension unit is substantially perpendicular to the base. When the at least one sleeve is moved toward the other end of the at least one first link, the suspension unit is substantially parallel to the base.

Preferably, a seat or a bed is connected to the support frame and located opposite to the suspension unit.

Preferably, a frame is connected to the support frame and the seat or the bed is connected to the frame.

The primary object of the present invention is to provide a baby stroller wherein the suspension unit absorbs shocks and vibration from the road so that when the baby stroller is moved on an uneven road or stops suddenly, the baby in the seat or the bed is not scared or slip to enhance the comfort and safety of the baby.

Another object of the present invention is to provide a baby stroller wherein the movable rods are moved up or down by operating the control rod so as to adjust the height of the seat or the bed, such that the user can easily put the baby into the seat or the bed, or remove the baby from the seat or the bed without injury of the user's waist or knees.

Yet another object of the present invention is to provide a baby stroller, when moving the movable blocks, the slides are moved up to release the control rods from the restriction portions so that the seat or the bed is rotated by the movable rod. When the seat or the bed is rotated to the desired position, the slides are moved back to engage the control rods with the restriction portions to set the seat or the bed. The function allows the user to set the seat or the bed to let the baby in the seat or the bed to face the user or to face front.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the baby stroller of the present invention;
Fig. 2 is an exploded view of the baby stroller of the present invention;
Fig. 3 is an exploded view to show the support frame, the suspension unit and the support member of the baby stroller of the present invention;
Fig. 4 shows the folded status of the baby stroller of the present invention;
Fig. 5 is a side view of the baby stroller of the present invention, wherein the bed is horizontally positioned;
Fig. 6 is a side view of the baby stroller of the present invention wherein the seat is tilt;
Fig. 7 is a partially cross sectional view to show that the movable rod is in the locked position, and movable rod of the suspension unit is set at a fixed height;
Fig. 8 is a partially cross sectional view to show that the movable rod is in the unlocked position, and movable rod of the suspension unit is adjustable;

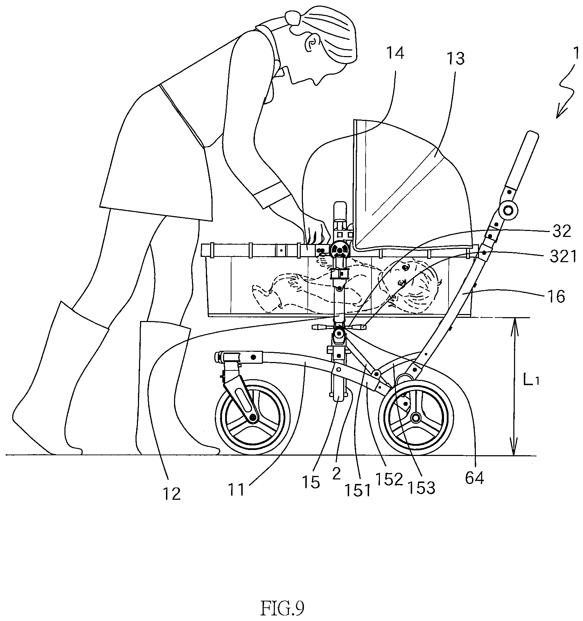

Fig. 9 shows that the user has to bend her waist to access the baby in the bed which is located horizontally at a lower position;

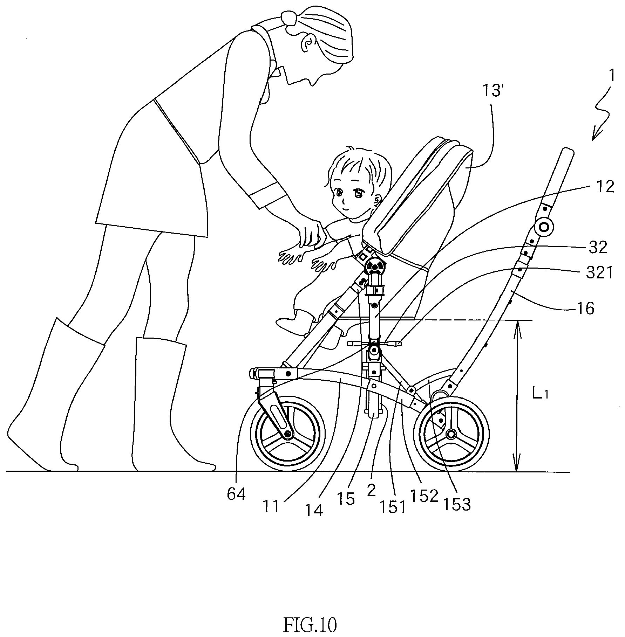

Fig. 10 is another view to show that the user has to bend her waist to access the baby in the seat which is tilt and positioned at a lower position;

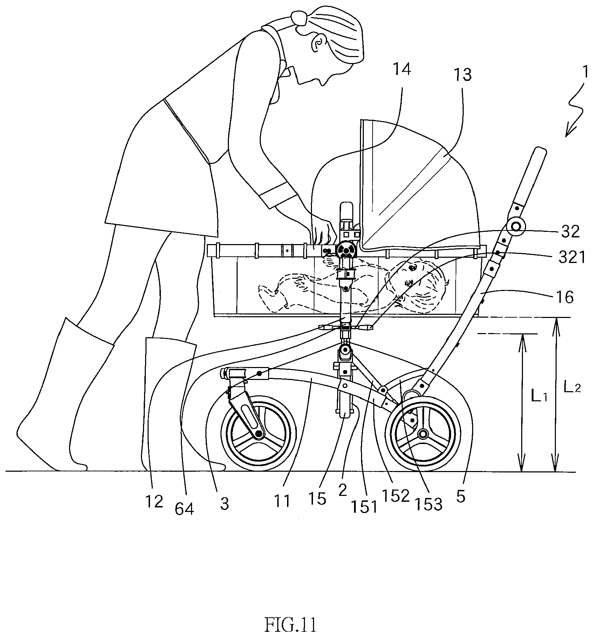

Fig. 11 shows that the user does not need to bend her waist to access the baby in the bed which is located horizontally at a higher position;

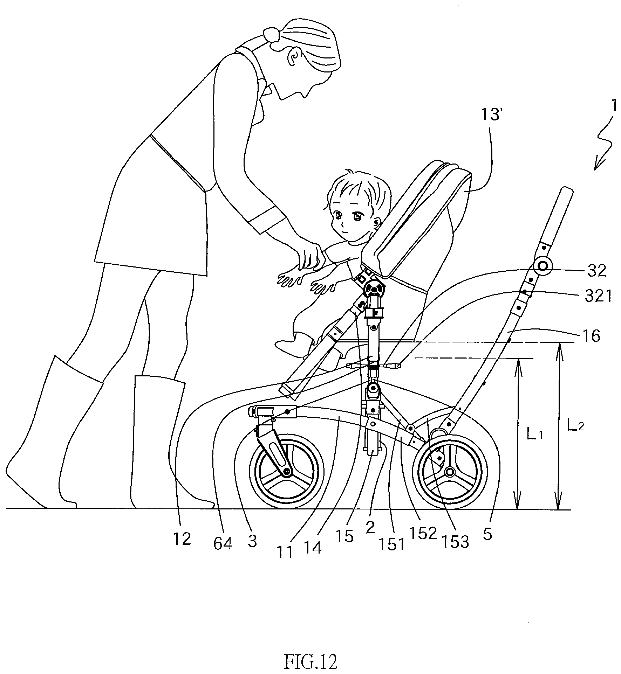

Fig. 12 is another view to show that the user does not need to bend her waist to access the baby in the seat which is tilt and positioned at a higher position;
Fig. 13 is a cross sectional view to show that the control rods are in the locked position;
Fig. 14 is a cross sectional view to show that the control rods are in the unlocked position;
Fig. 15 is a top view to show that the support frame is rotated;
Fig. 16 shows that the bed is set at the horizontal position and the baby faces front;
Fig. 17 shows that the seat is set at the tilt position and the baby faces front;
Fig. 18 shows that the bed is set at the horizontal position and the baby faces the user, and
Fig. 19 shows that the seat is set at the tilt position and the baby faces the user.

### DETAILED DESCRIPTION OF THE PREFERRED EMBODIMENT

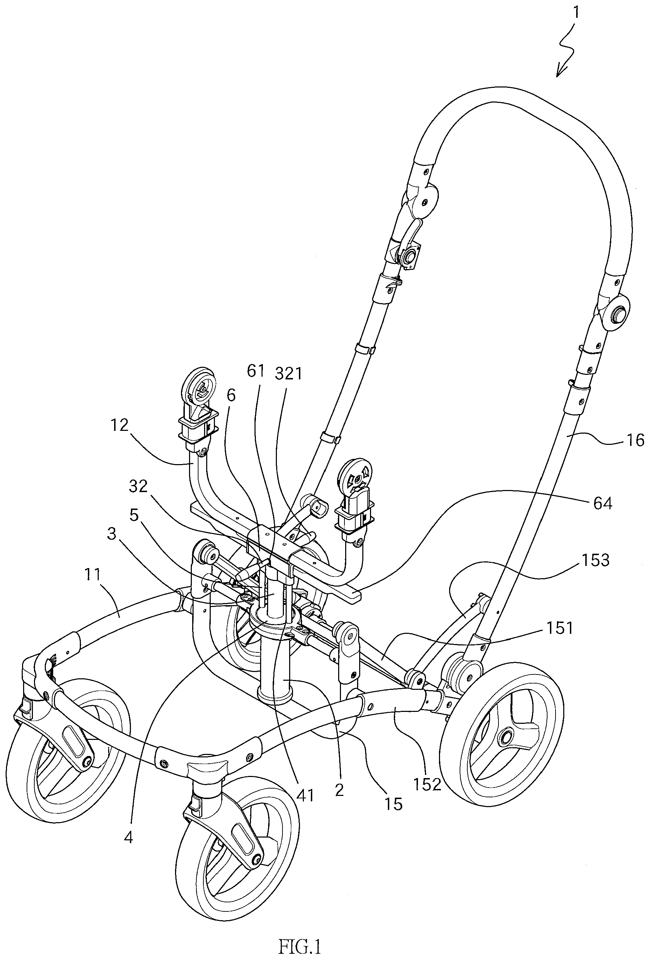

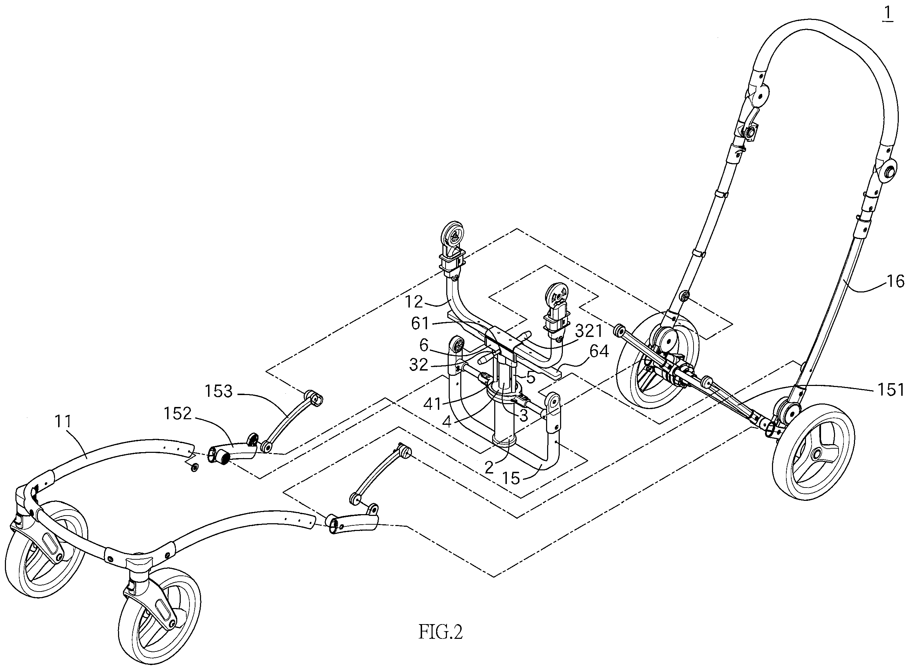

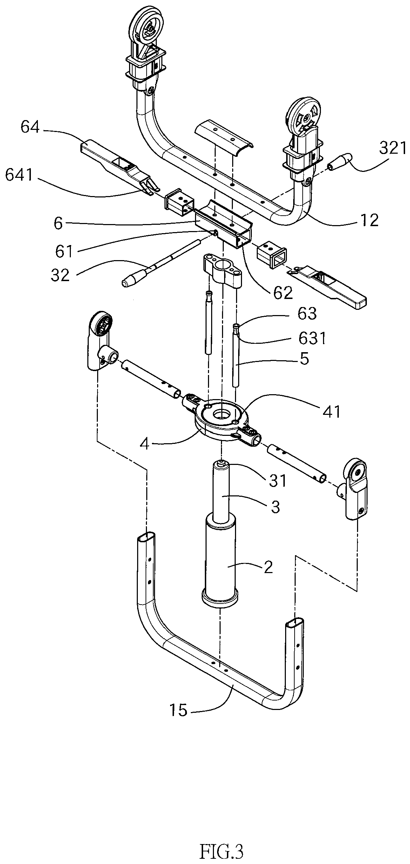

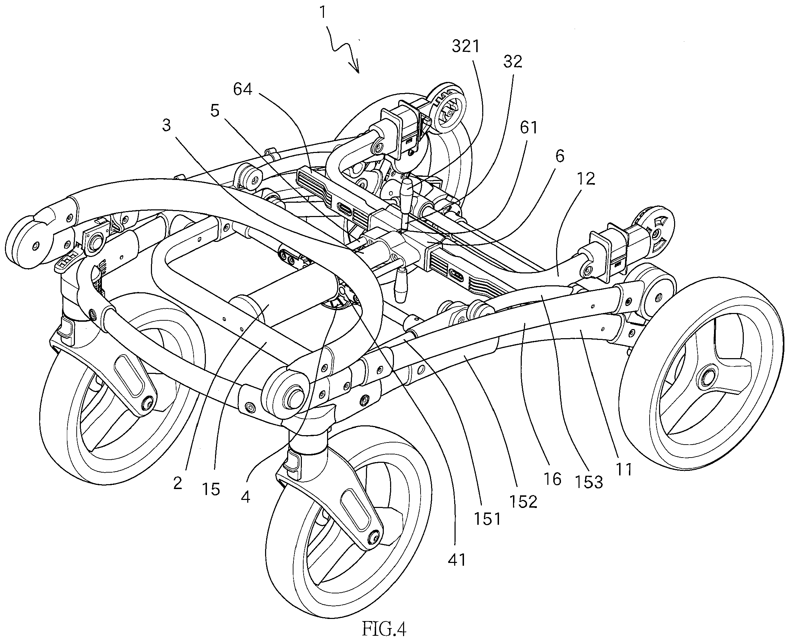

Referring to Figs. 1 to 5, the baby stroller of the present invention comprises a base 11 and a suspension unit 2 is connected to the base 11. The suspension unit 2 has a movable rod 3 which is movably connected to the suspension unit 2. A support frame 12 is connected to the distal end of the movable rod 3, such that the distance between the support frame 12 and the base 11 can be adjusted by movement of the movable rod 3. The movable rod 3 is rotatable relative to the suspension unit 2. A positioning seat 4 is mounted to the suspension unit 2 and has two restriction portions 41. The support frame 12 has two control rods 5 which are located corresponding to the restriction portions 41. The control rods 5 are connected to the restriction portions 41 when the control rods 5 are located at a locked position. The control rods 5 are disconnected from the restriction portions 41 when the control rods 5 are located at an unlocked position. The support frame 12 is pivotable when the movable rod 3 is pivoted.

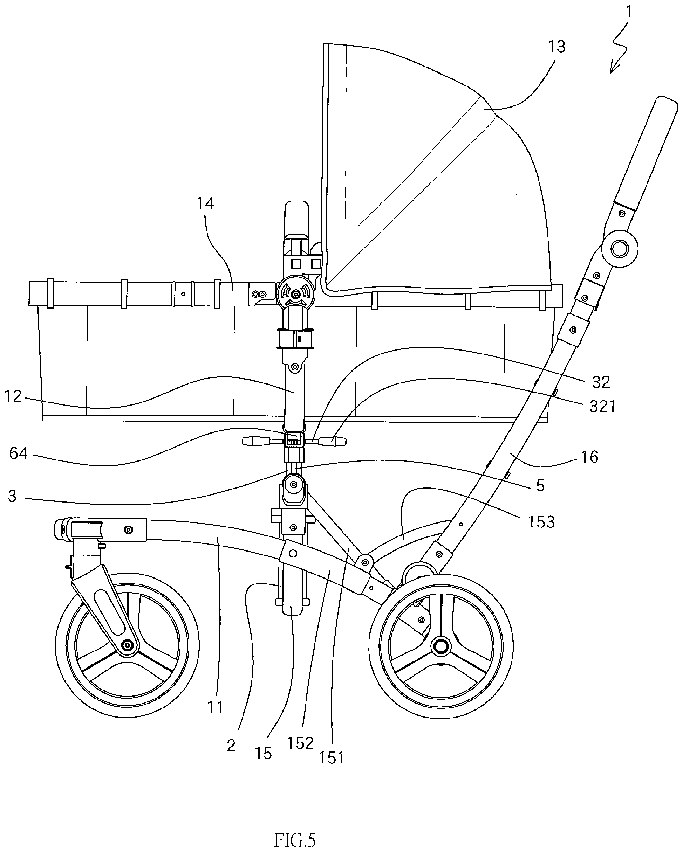

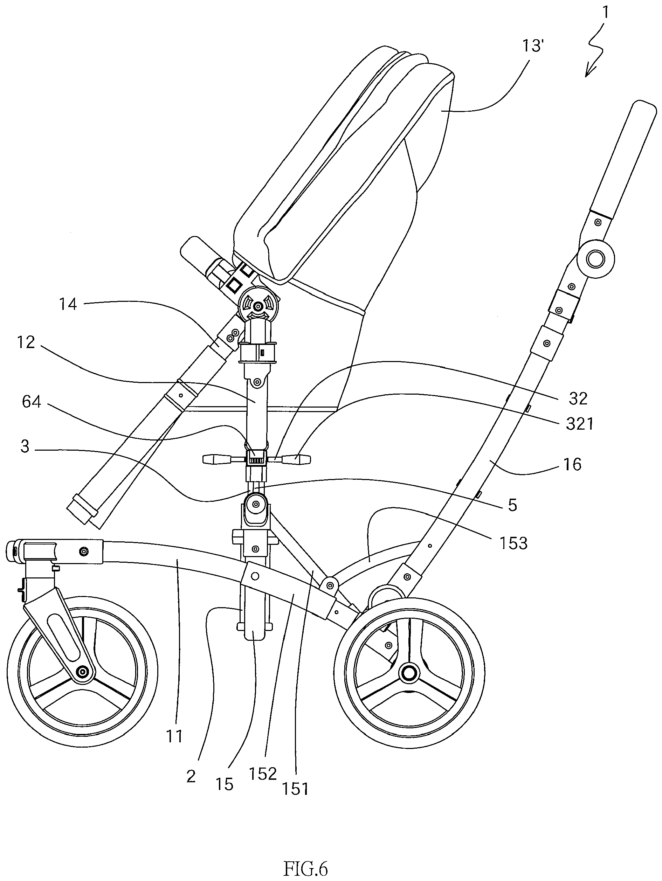

As shown in Figs. 5 and 6, a seat 13' or a bed 13 is connected to the support frame 12 and located opposite to the suspension unit 2. In an embodiment, a frame 14 is connected to the support frame 12 and the seat 13' or the bed 13 is connected to the frame 14.

The base 11 has a support member 15 and the suspension unit 3 is connected to the support member 15. The support member 15 has two first links 151 and two sleeves 152, wherein the first links 151 are pivotably connected to the frame 11. The sleeves 152 are slidably connected to the frame 11. The frame 11 has a handle 16 pivotably connected thereto. The sleeves 152 are pivotably connected to the a handle 16 by two second links 153 so that both of the handle 16 and the support member 15 are able to be folded in the base 11. The suspension unit 2 can also be folded with the support member 15. When the sleeves 152 are moved toward one end of the first links 151, the suspension unit 2 is substantially perpendicular to the base 11. When the sleeves 152 are moved toward the other end of the first links 151, the suspension unit 2 is substantially parallel to the base 11.

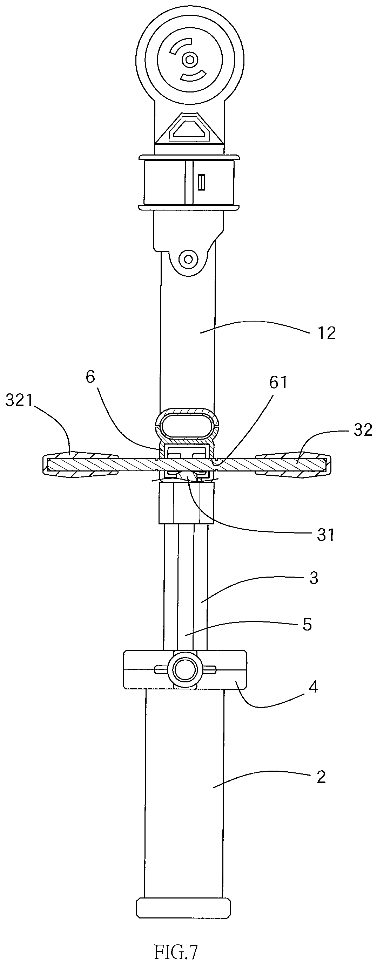

In one embodiment, the suspension unit 2 is a pneumatic cylinder or a hydraulic cylinder. The movable rod 3 is a piston rod of the pneumatic cylinder or the hydraulic cylinder. The movable rod 3 has a valve 31 which is connected to and controlled by an operation member 32. As shown in Fig. 7, when the operation member 32 is not activated, and the valve is in the closed status, the movable rod 3 is not movable and is secured at the position so that the seat 13' or the bed 13 connected to the movable rod 3 is avoided from vibration and shocks by the suspension unit 2. When the support member 15 is located at the upright position, and the suspension unit 2 is substantially perpendicular to the base 11 which is parallel to the road. Preferably, a smaller angle is formed between the suspension unit 2 and the road, so that the suspension unit 2 is able to absorb shocks and vibration from the road, and the seat 13' or the bed 13 is maintained stable and the baby in the seat 13' or the bed 13 feels comfortable. Because there is a smaller angle formed between the suspension unit 2 and the road, so that even if the baby stroller 1 stops suddenly, the baby in the seat 13' or the bed 13 does not slip upward and backward suddenly to prevent the baby from being scared.

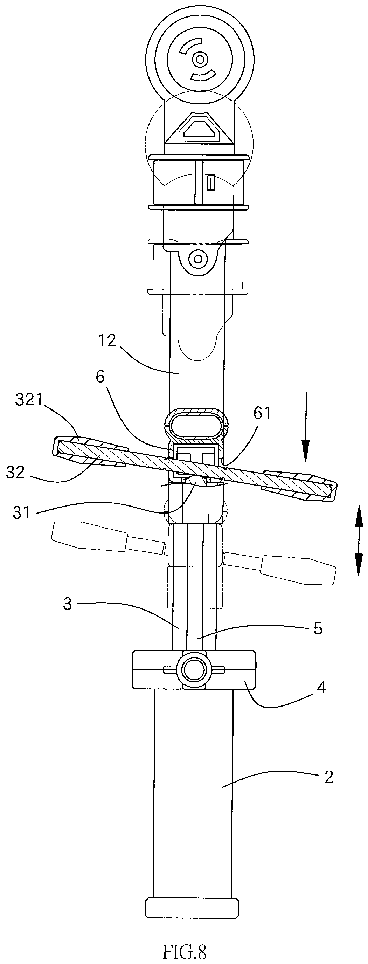

As shown in Fig. 8, when adjusting the height of the support frame 12 and the seat 13' or the bed 13, the user operates the operation member 32 to activate the valve 31 so that the movable rod 3 is retractable relative to the suspension unit 2. Therefore, the position of the support frame 12 and the seat 13' or the bed 13 is adjusted. When the support frame 12 and the seat 13' or the bed 13 are adjusted to a desired position, the operation member 32 is again operated to shut off the valve 31, the position/height of the support frame 12 and the seat 13' or the bed 13 is set. As shown in Figs, 9 and 10, when the user is tall and the height "L1" between the bed 13 and the road is too low, the movable rod 5 is adjusted as mentioned in Figs. 7 and 8 to raise the bed 13 to the height "L2", such that the user does not need to bend too much to access the baby in the bed 13.

The support frame 12 has a tube 6 which has a hole 61, the valve 31 is located on one side of the hole 61. The operation member 32 is connected to the hole 61 so that the operation member 32 can be conveniently operated. When the operation member 32 does not need to be operated, the lever 321 on the operation member 32 can be detached therefrom, and the operation member 32 can be pulled from the hole 51 for convenience of storage.

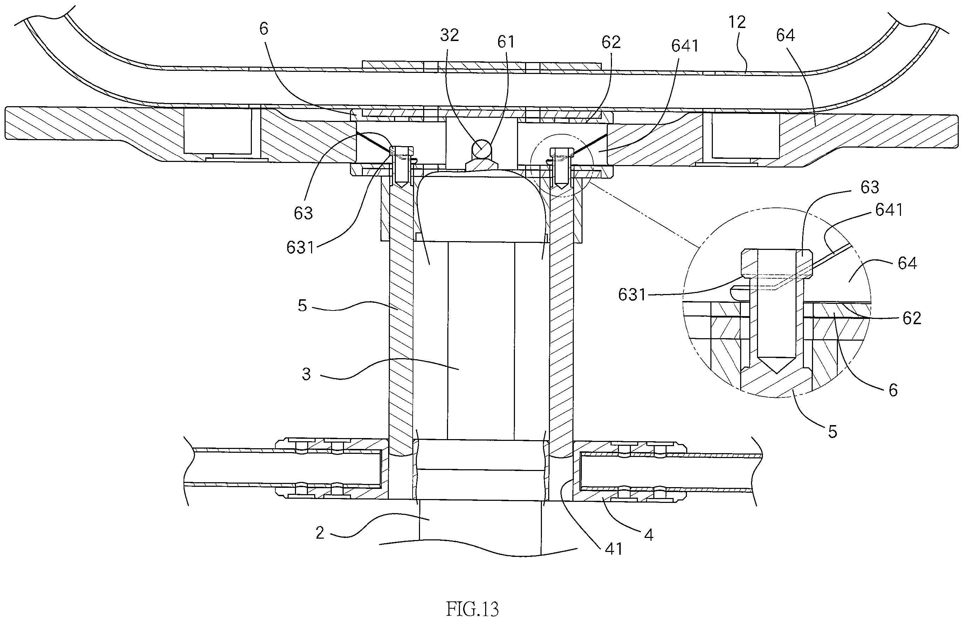

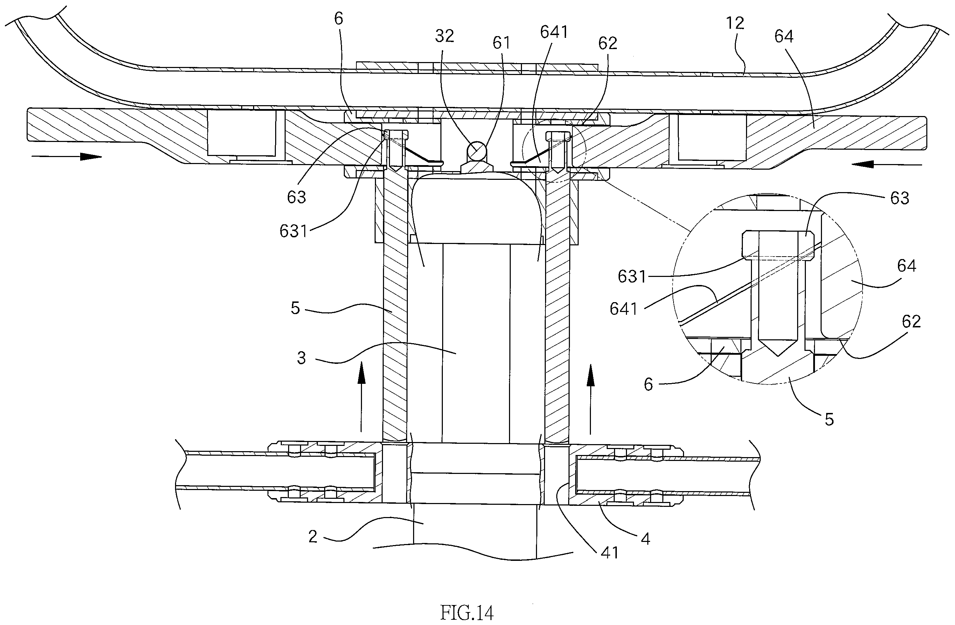

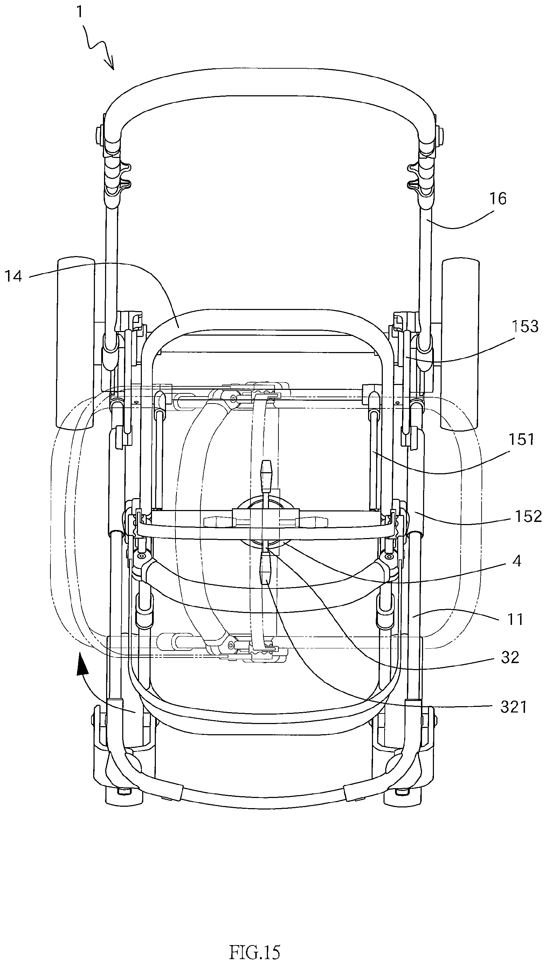

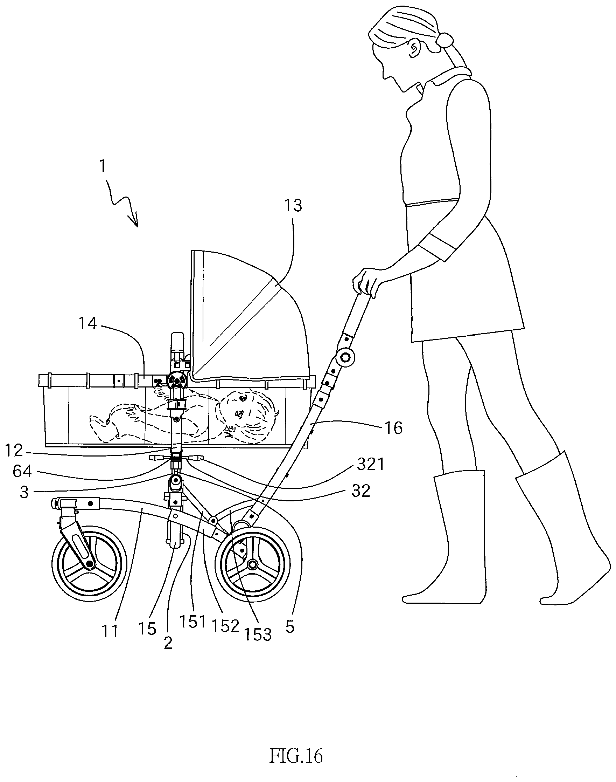

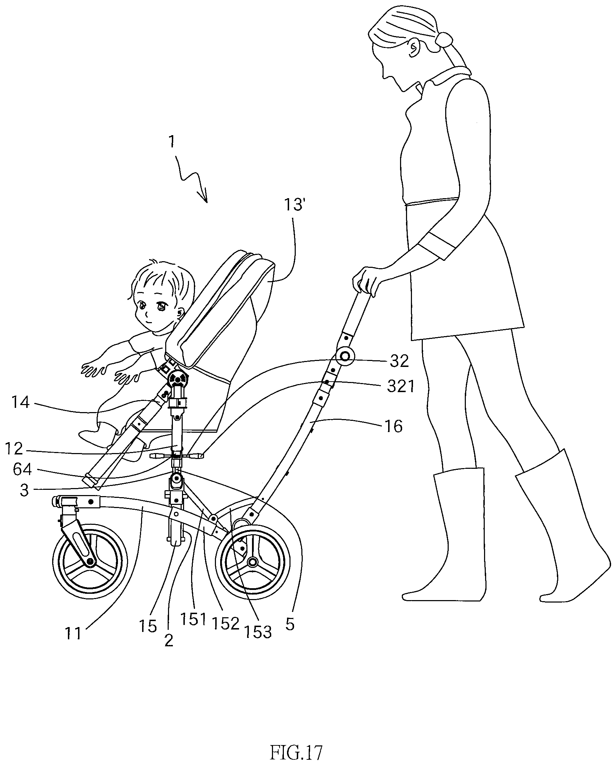

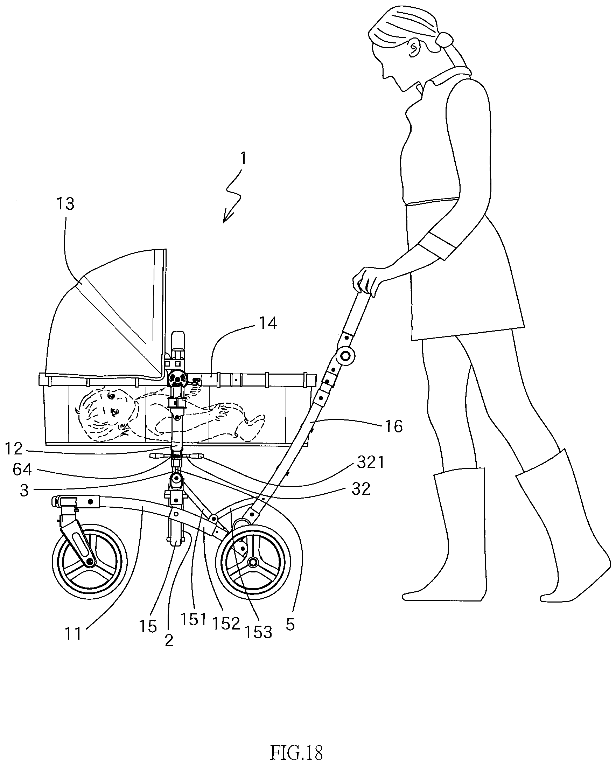

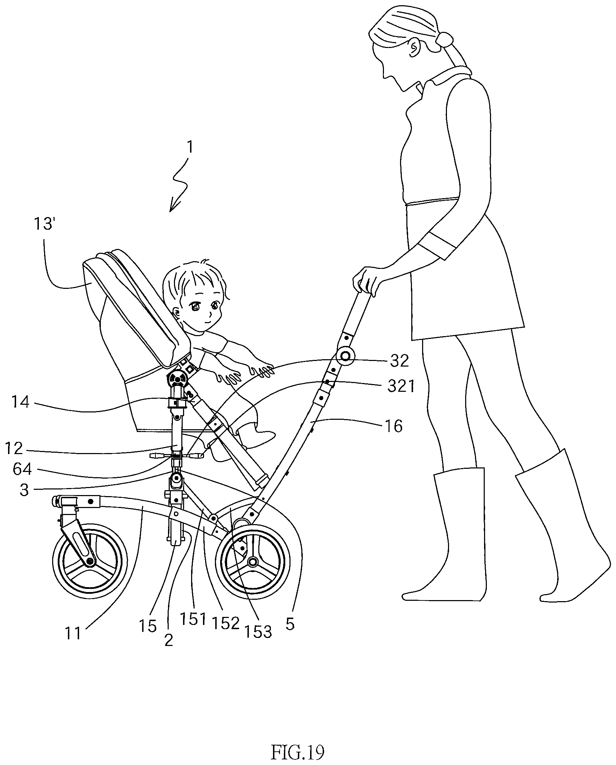

For the rotation of the support member 12 and the bed 13, the tube 6 has a passage 62 defined axially therethrough. Two slides 63 are located in the passage 62 and connected to the control rods 5 respectively. The slides 63 each have a stepped face 631. Two movable blocks 64 are inserted into the passage 62 and located substantially perpendicular to the control rods 5. The movable blocks 64 each have a rail 641 which is an inclined surface and located corresponding to the stepped face 631 of the slide 63 corresponding thereto. The slides 63 are moved up and down when stepped faces 631 of the slides 63 are moved along the rails 641. As shown in Fig. 13, when the control rods 5 are located at the locked position, the stepped faces 631 of the slides 63 are not pushed by the rails 641, so that the control rods 5 are located in the restriction portions 41 and the support frame 12 cannot rotated along with the movable rod 3. As shown in Fig. 14, when the movable blocks 64 are pushed toward the tube 6, the stepped faces 631 of the slides 63 are pushed by the rails 641, so that slides 63 move upward along the rails 641, and the control rods 5 are moved upward and removed from the restriction portions 41 so as to be the unlocked position. Therefore, the support frame 12 and the bed 13 are rotated by the movable rod 3 as shown in Fig. 15. The seat 13' or the bed 13 can be set to let the baby face front as shown in Figs. 16 and 17. Alternatively, the seat 13' or the bed 13 can also be set to let the baby face the user/parent as shown in Figs. 18 and 19 such that the user/parent can see the baby and the baby is calm with his/her parent in sight. After the rotation action is finished, the user/parent pulls the movable blocks 64 back to their original positions. The movable blocks 64 each have be cooperated with a spring (not shown) to move the movable blocks 64 back to their original positions. As shown in Fig. 13, the slides 63 are not pushed downward by the rails 641, so that the operation rods 5 are moved downward and engaged with the restriction portions 41 to set the seat 13' or the bed 13.

While we have shown and described the embodiment in accordance with the present invention, it should be clear to those skilled in the art that further embodiments may be made without departing from the scope of the present invention.

## Claims

1. A baby stroller comprising:
a base (11) and a suspension unit (2) connected to the base (11), the suspension unit (2) having a movable rod (3) which is movably connected to the suspension unit (2), and
a support frame (12) connected to a distal end of the movable rod (3), a distance between the support frame (12) and the base (11) being adjusted by movement of the movable rod (3),
wherein the movable rod (3) is rotatable relative to the suspension unit (2), a positioning seat (4) mounted to the suspension unit (2) and having at least one restriction portion (41), the support frame (12) has at least one control rod (5) which is located corresponding to the at least one restriction portion (41), the at least one control rod (5) is connected to the at least one restriction portion (41) when the at least one control rod (5) is located at a locked position, the at least one control rod (5) is disconnected from the at least one restriction portion 41) when the at least one control rod (5) is located at an unlocked position, the support frame (12) is pivotable when the movable rod (3) is pivoted, **characterized in that** the support frame (12) has a tube which has at least one passage, at least one slide is located in the at least one passage and connected to the at least one control rod (5), the at least one slide has a stepped face, at least one movable block is inserted into the at least one passage and located substantially perpendicular to the at least one control rod (5), the at least one movable block has a rail which is an inclined surface and located corresponding to the stepped face of the at least one slide, the at least one slide is moved up and down when stepped face of the at least one slide is moved along the rail.

2. The baby stroller as claimed in claim 1, wherein the suspension unit (2) is a pneumatic cylinder or a hydraulic cylinder.

3. The baby stroller as claimed in claim 2, wherein the movable rod (3) is a piston rod of the pneumatic cylinder or the hydraulic cylinder, the movable rod (3) has a valve (31) which is connected to and controlled by an operation member.

4. The baby stroller as claimed in claim 3, wherein the support frame (12) has a tube which has a hole, the valve (31) is located on one side of the hole, the operation member is connected to the hole.

5. The baby stroller as claimed in claim 1, wherein the base (11) has a support member and the suspension unit (2) is connected to the support member.

6. The baby stroller as claimed in claim 5, wherein the support member has at least one first link and at least one sleeve, the at least one first link is pivotably connected to the frame (14), the at least one sleeve is slidably connected to the frame (14), when the at least one sleeve is moved toward an end of the at least one first link, the suspension unit (2) is substantially perpendicular to the base (11), when the at least one sleeve is moved toward the other end of the at least one first link, the suspension unit (2) is substantially parallel to the base (11).

7. The baby stroller as claimed in claim 1, wherein a seat or a bed is connected to the support frame (12) and located opposite to the suspension unit(2).

8. The baby stroller as claimed in claim 7, wherein a frame (14) is connected to the support frame(12) and the seat or the bed is connected to the frame (14).

## Patentansprüche

1. Kinderwagen, Folgendes umfassend:
ein Untergestell (11) und eine mit dem Untergestell (11) verbundene Aufhängungseinheit (2), wobei die Aufhängungseinheit (2) eine bewegliche Stange (3) aufweist, die beweglich mit der Aufhängungseinheit (2) verbunden ist, und
einen Tragrahmen (12), der mit einem distalen Ende der beweglichen Stange (3) verbunden ist, wobei der Abstand zwischen dem Tragrahmen (12) und dem Untergestell (11) durch Bewegen der beweglichen Stange (3) eingestellt wird,
wobei die bewegliche Stange (3) in Bezug zur Aufhängungseinheit (2) drehbar ist, wobei eine Einstellhalterung (4) an der Aufhängungseinheit (2) angebracht ist und mindestens einen Verengungsabschnitt (41) aufweist, wobei der Tragrahmen (12) mindestens eine Steuerstange (5) aufweist, die entsprechend des mindestens einen Verengungsabschnitts (41) angeordnet ist, wobei die mindestens eine Steuerstange (5) mit dem mindestens einen Verengungsabschnitt (41) verbunden ist, wenn sich die mindestens eine Steuerstange (5) in einer Verriegelungsposition befindet, wobei die mindestens eine Steuerstange (5) von dem mindestens einen Verengungsabschnitt (41) getrennt ist, wenn sich die mindestens eine Steuerstange (5) in einer Entriegelungsposition befindet, wobei der Tragrahmen (12) verschwenkbar ist, wenn die bewegliche Stange (3) verschwenkt ist, **dadurch gekennzeichnet, dass**
der Tragrahmen (12) ein Rohr aufweist, das mindestens einen Durchgang aufweist, wobei sich mindestens ein Schlitten in dem mindestens einen Durchgang befindet und mit der mindestens einen Steuerstange (5) verbunden ist, wobei der mindestens eine Schlitten eine abgestufte Fläche aufweist,
wobei mindestens ein beweglicher Block in den mindestens einen Kanal eingesetzt ist und sich im Wesentlichen senkrecht zu der mindestens einen Steuerstange (5) befindet, wobei der mindestens eine bewegliche Block eine Schiene aufweist, die eine geneigte Fläche ist und entsprechend der abgestuften Fläche des mindestens einen Schlittens angeordnet ist, wobei der mindestens eine Schlitten nach oben und unten bewegt wird, wenn die abgestufte Fläche des mindestens einen Schlittens entlang der Schiene bewegt wird.

2. Kinderwagen nach Anspruch 1, wobei die Aufhängungseinheit (2) ein Pneumatikzylinder oder ein Hydraulikzylinder ist.

3. Kinderwagen nach Anspruch 2, wobei die bewegliche Stange (3) eine Kolbenstange des Pneumatikzylinders oder des Hydraulikzylinders ist, wobei die bewegliche Stange (3) ein Ventil (31) aufweist, das mit einem Betätigungselement verbunden ist und davon gesteuert wird.

4. Kinderwagen nach Anspruch 3, wobei der Tragrahmen (12) ein Rohr aufweist, das ein Loch aufweist, wobei sich das Ventil (31) auf einer Seite des Lochs befindet, wobei das Betätigungselement mit dem Loch verbunden ist.

5. Kinderwagen nach Anspruch 1, wobei das Untergestell (11) ein Tragelement aufweist und die Aufhängungseinheit (2) mit dem Tragelement verbunden ist.

6. Kinderwagen nach Anspruch 5, wobei das Tragelement mindestens ein erstes Gelenk und mindestens eine Manschette aufweist, wobei das mindestens eine erste Gelenk verschwenkbar mit dem Rahmen (14) verbunden ist, wobei die mindestens eine Manschette verschiebbar mit dem Rahmen (14) verbunden ist, wobei, wenn die mindestens eine Manschette in Richtung eines Endes des mindestens einen ersten Gelenks bewegt wird, die Aufhängungseinheit (2) im Wesentlichen senkrecht zum Untergestell (11) ist, wobei, wenn die mindestens eine Manschette in Richtung des anderen Endes des mindestens einen ersten Gelenks bewegt wird, die Aufhängungseinheit (2) im Wesentlichen parallel zum Untergestell (11) ist.

7. Kinderwagen nach Anspruch 1, wobei ein Sitz oder Bett mit dem Tragrahmen (12) verbunden ist und der Aufhängungseinheit (2) entgegengesetzt angeordnet ist.

8. Kinderwagen nach Anspruch 7, wobei ein Rahmen (14) mit dem Tragrahmen (12) verbunden ist und der Sitz oder das Bett mit dem Rahmen (14) verbunden ist.

## Revendications

1. Poussette de bébé comprenant:
une base (11) et une unité de suspension (2) reliée à la base (11), l'unité de suspension (2) ayant une tige mobile (3) qui est reliée de manière mobile à l'unité de suspension (2), et un cadre support (12) relié à une extrémité distale de la tige mobile (3), une distance entre le cadre support (12) et la base (11) étant réglée par déplacement de la tige mobile (3),
la tige mobile (3) pouvant tourner par rapport à l'unité de suspension (2), un siège de positionnement (4) monté sur l'unité de suspension (2) et ayant au moins une partie de restriction (41), le cadre support (12) ayant au moins une tige de commande (5) qui est située en correspondance avec l'au moins une partie de restriction (41), l'au moins une tige de commande (5) étant reliée à l'au moins une partie de restriction (41) lorsque l'au moins une tige de commande (5) est située dans une position verrouillée, l'au moins une tige de commande (5) étant détachée de l'au moins une partie de restriction (41) lorsque l'au moins une tige de commande (5) est située dans une position non verrouillée, le cadre support (12) étant pivotant lorsque la tige mobile (3) est pivotée,
**caractérisée en ce que** le cadre support (12) comporte un tube qui présente au moins un passage, au moins un coulisseau est situé dans l'au moins un passage et relié à l'au moins une tige de commande (5), l'au moins un coulisseau présente une face étagée, au moins un bloc mobile est inséré dans l'au moins un passage et situé sensiblement perpendiculairement à l'au moins une tige de commande (5), l'au moins un bloc mobile a un rail qui est une surface inclinée et situé en correspondance avec la face étagée de l'au moins un coulisseau, l'au moins un coulisseau est déplacé vers le haut et vers le bas lorsque la face étagée de l'au moins un coulisseau est déplacée sur le rail.

2. Poussette de bébé selon la revendication 1, dans laquelle l'unité de suspension (2) est un cylindre pneumatique ou un cylindre hydraulique.

3. Poussette de bébé selon la revendication 2, dans laquelle la tige mobile (3) est une tige de piston du cylindre pneumatique ou du cylindre hydraulique, la tige mobile (3) présente une soupape (31) qui est reliée à un élément de commande et commandée par celui-ci.

4. Poussette de bébé selon la revendication 3, dans laquelle le cadre support (12) présente un tube qui présente un trou, la soupape (31) est située d'un côté du trou, l'élément de commande étant relié au trou.

5. Poussette de bébé selon la revendication 1, dans laquelle la base (11) présente un élément de support et l'unité de suspension (2) est reliée à l'élément de support.

6. Poussette de bébé selon la revendication 5, dans laquelle l'élément de support présente au moins un premier maillon et au moins un manchon, l'au moins un premier maillon est relié de manière pivotante au cadre (14), l'au moins un manchon est relié de manière coulissante au cadre (14), lorsque l'au moins un manchon est déplacé vers une extrémité de l'au moins un premier maillon, l'unité de suspension (2) est sensiblement perpendiculaire à la base (11), lorsque l'au moins un manchon est déplacé vers l'autre extrémité de l'au moins un premier maillon, l'unité de suspension (2) est sensiblement parallèle à la base (11).

7. Poussette de bébé selon la revendication 1, **caractérisée en ce qu'**un siège ou un lit est relié au cadre support (12) et est situé à l'opposé de l'unité de suspension (2).

8. Poussette de bébé selon la revendication 7, dans laquelle un cadre (14) est relié au cadre support (12) et le siège ou le lit est relié au cadre (14).
